# EUROPEAN PATENT SPECIFICATION

(11) **EP 2 780 637 B1**
(45) Date of publication and mention of the grant of the patent: **01.03.2017**
(21) Application number: 12837715.7
(22) Date of filing: 04.10.2012
(51) Int. Cl.: F24D 3/14

(54) **FLOOR SYSTEM INTEGRATED WITH ONDOL PIPE**
FUSSBODENSYSTEM MIT INTEGRIERTEM ONDOLROHR
SYSTÈME DE PLANCHER INTÉGRÉ À UN TUYAU D'ONDOL

(30) Priority: 04.10.2011 KR 20110100453
(43) Date of publication of application: 24.09.2014
(73) Proprietor: LG Hausys, Ltd., Seoul 07236 (KR)
(72) Inventor: CHAE, Kyoung Myoung, Cheongju-si Chungcheongbuk-do 28650 (KR); BYUN, Yong Geun, Cheongju-si Chungcheongbuk-do 28464 (KR); KANG, Heon Sung, Cheongju-si Chungcheongbuk-do 28447 (KR); KANG, Se Chang, Cheongju-si Chungcheongbuk-do 28341 (KR); KIM, Jun Yup, Cheongju-si Chungcheongbuk-do 28453 (KR)
(74) Representative: Goddar, Heinz J.
(86) International application number: PCT/KR2012/008025
(87) International publication number: WO 2013/051850

(56) References cited:
- EP-A2- 0 112 272
- AT-U1- 10 069
- CH-A- 479 031
- DE-U1- 29 516 947
- FR-A1- 2 561 286
- JP-A- 2002 030 796
- JP-A- 2004 198 009
- KR-A- 20050 055 671
- KR-U- 20010 000 459
- US-A- 5 879 491

## Description

### Technical Field

The present invention relates to a floor system integrated with an ondol pipe, and more particularly, to a deck plate for a floor slab, a slab module integrated with an ondol pipe, and a floor system integrated with an ondol pipe, which is capable of reducing the construction time and the cost of construction in building construction sites and also constructing the ondol pipe more rapidly and easily by forming the deck plate that forms the floor slab in the form of a panel in which a pipe installation groove has already been formed.

A floor system according to the prior art is e.g. known from US 5 879 491 A.

### Background Art

In the prior art, in order to construct the floor structure of a building that provides indoor heating, a wet construction method and a dry construction method are basically used.

In the wet construction method, first, iron reinforcing rods are arranged, a molding flask is installed in a construction site, and concrete is formed within the molding flask. A slab is formed by curing the concrete, and lightweight air bubble concrete is formed over the concrete structure and then cured. Next, an ondol pipe is installed over the lightweight air bubble concrete, and a finishing work is performed using floor mortar.

That is, the wet construction method is disadvantageous in that an overall construction time, particularly, due to the curing processes is increased because this method requires at least three forming and curing process processes, including the process of forming and curing concrete for forming the slab, the process of forming and curing the lightweight air bubble concrete, and the process of forming and curing finishing mortar, are used.

Meanwhile, in the dry construction method, after a beam work for structural stability is performed, a floor is constructed by combining structure materials for forming a floor surface and an additional heating panel construction work is performed on the upper side. However, this work is disadvantageous in that the construction period is delayed and the cost of construction is increased owing to a complicate work process in a site.

Accordingly, there is a need for the development of technology which can reduce the construction period and the cost of construction by simplifying the process.

### Disclosure of Invention

### Technical Problem

It is an object of the present invention to provide a floor system integrated with an ondol pipe, which is capable of reducing the construction time and the cost of construction in building construction sites and also constructing the ondol pipe more rapidly and easily by forming the deck plate that forms the floor slab in the form of a panel in which a pipe installation groove has already been formed.

Objects of the present invention are not limited to the above-described object and other technical objects that have not been described above will become evident to those skilled in the art from the following description.

### Solution to Problem

In accordance with the present invention, the above object is achieved by a floor system according to claim 1.

### Advantageous Effects of Invention

The floor system integrated with an ondol pipe in accordance with the present invention has the following advantages.

First, the deck plate previously fabricated using processes, such as concrete forming and curing, in an additional manufacturing plant is used to form the floor slab of a building. Accordingly, the construction time and the cost of construction can be substantially reduced because the concrete forming and curing processes need to be performed in a building construction site.

Second, an ondol pipe has only to be disposed in a pipe installation groove already formed in the deck plate for the purpose of a heating construction in a construction site. Accordingly, the construction time and the cost of construction can be reduced because additional heating panel construction is omitted in a construction site.

The effects of the present invention are not limited to the above-described effects and other technical effects that have not been described will be evidently understood by those skilled in the art from the following description.

### Brief Description of Drawings

FIG. 1 is an exploded perspective view showing a slab module integrated with an ondol pipe
FIG. 2 is a cross-sectional view showing a floor system integrated with an ondol pipe in accordance with an embodiment of the present invention.
FIG. 3 is a perspective view showing a floor system integrated with an ondol pipe in accordance with a second embodiment which does not form part of the present invention.

### Mode for the Invention

Hereinafter, some exemplary embodiments of the present invention are described with reference to the accompanying drawing so that advantages in the operation of the present invention and the objects achieved by the embodiments of the present invention can be fully understood.

The exemplary embodiments of the present invention are described in detail with reference to the accompanying drawing. The same reference numerals denote the same elements throughout the drawings.

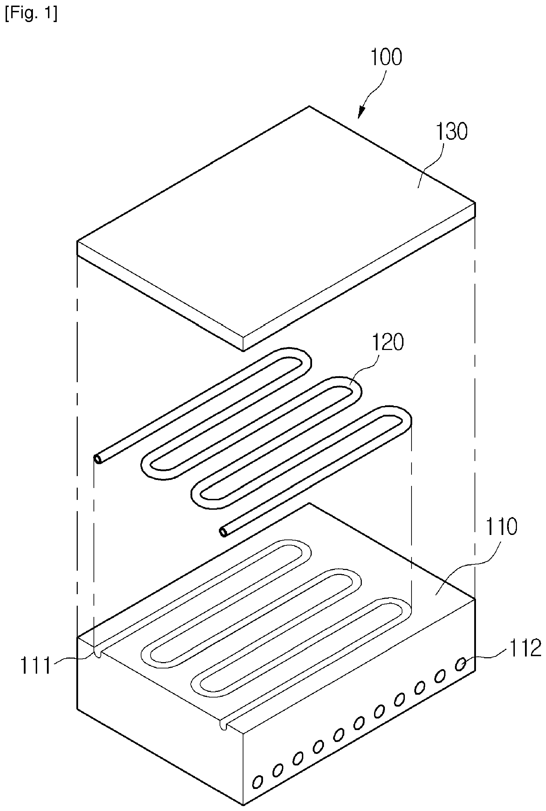

FIG. 1 is an exploded perspective view showing a slab module integrated with an ondol pipe

As shown in FIG. 1, the slab module integrated with an ondol pipe 100 (hereinafter referred to as the slab module) is to form the floor slab structure of a building. The slab module includes a deck plate 110 configured to have a pipe installation groove 111 already formed therein and to have iron reinforcing rods 112 formed therein, an ondol pipe 120 placed in the pipe installation groove 111, and a finishing plate 130 installed over the deck plate 110.

As shown in FIG. 1, the deck plate 110 is iron concrete having a thickness of about 100 mm or higher. The deck plate 110 is configured to support a load applied from the upper side and is fabricated by placing the iron reinforcing rods 112 within a mold (not shown) in an additional manufacturing plant and performing processes, such as concrete forming, primary curing, removal of forms, and full curing. Here, the pipe installation groove 111 in which the ondol pipe 120 is placed is formed in the top surface of the deck plate 110. The pipe installation groove 111 may be formed by forming concrete in a mold that has an internal structure of a predetermined shape corresponding to the pipe installation groove 111. Furthermore, the pipe installation groove 111 may be formed by forming concrete in a cubic mold not equipped with the internal structure using an additional groove processing machine apparatus.

In the present embodiment, the deck plate 110 functions as the floor slab of a building. Lightweight concrete or common concrete may be used as concrete for forming the deck plate 110. It is however preferred that lightweight concrete capable of preventing a heavy load from being applied to an underlying structure that supports the slab module 100 by further reducing self-weight when designing the structure of a building be used as the concrete for forming the deck plate 110.

The lightweight concrete has relatively lower thermal conductivity than common concrete. Accordingly, the slab module 100 in accordance with the present embodiment can prevent cold air, rising from the lower side of the slab module 100, from being transferred to an indoor space on the upper side of the finishing plate 130 because the slab module 100 is equipped with the deck plate 110 made of the lightweight concrete. That is, the deck plate 110 made of the lightweight concrete has a sufficient heat shield property so that the efficiency of heat generated from the ondol pipe 120 can be increased by precluding the cold air as described above. Furthermore, in the present embodiment, the deck plate 110 functions as a heat storage layer for absorbing some of heat generated from the ondol pipe 120 and storing the absorbed heat.

In summary, the deck plate 110 is not fabricated using processes, such as concrete forming and curing, in the construction site of a building, but is fabricated in the form of a panel in an additional manufacturing plant and then moved to housing construction sites or industrial housing construction sites in order to construct floors. The deck plate 110 in accordance with the present embodiment functions as a common floor slab and also functions as a heating panel in which the ondol pipe 120 is installed because it includes the pipe installation groove 111.

The ondol pipe 120 is a pipe through which hot water for heating flows. The ondol pipe 120 can be simply constructed by placing the ondol pipe 120 in the pipe installation groove 111 that has already been formed in the top surface of the deck plate 110 in a construction site. Here, the pipe installation groove 111 is previously formed in a portion where the ondol pipe 120 will be placed upon construction, thus providing a space where the ondol pipe 120 will be placed. More particularly, the pipe installation groove 111 is previously formed in the top surface of the deck plate 110 as described above on the basis of the deployment design structure of the ondol pipe 120 that will be constructed in a building, and the ondol pipe 120 is simply seated in the pipe installation groove 111 in a construction site. In addition, the present invention can reduce the construction period and the cost of construction resulting from reduced processes because wet construction, such as additional concrete forming and curing for installing the ondol pipe 120, is not necessary when constructing a building.

The finishing plate 130 is a member for forming the top surface of the slab module 100 and can be fabricated in the form of a sheet using cement-series or polymer synthetic resin-series materials. Furthermore, the finishing plate 130 may be made of cement mortar or yellow soil mortar in order to reinforce strength and add an eco-friendly feeling.

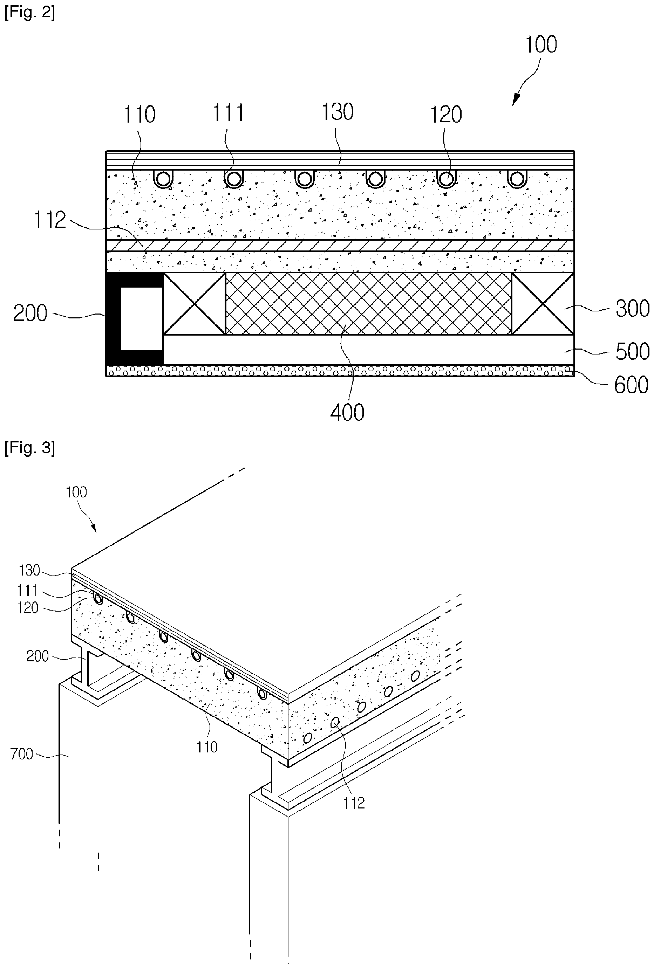

FIG. 2 is a cross-sectional view showing a floor system integrated with an ondol pipe in accordance with the embodiment of the present invention, and FIG. 3 is a perspective view showing a floor system integrated with an ondol pipe in accordance with the second embodiment

The floor system integrated with an ondol pipe (hereinafter referred to as the floor system) in accordance with the embodiment of the present invention is described below.

As shown in FIGs. 1 and 2, the floor system in accordance with the present embodiment is installed in a building of, for example, a non-bearing wall type structure depending on the frame design of a building. The floor system includes a plurality of beams 200 spaced apart from one another, a plurality of floor beams 300 each disposed between the beams 200, the slab module 100 disposed over the beams 200 and the floor beams 300, a glass wool heat shield material 400 disposed between the floor beams 300, a frame board 500 disposed to come in contact with the bottoms of the floor beams 300, and a heat shield material 600 disposed at the lower layer, and disposed under the beams 200 and the floor beams 300, and configured to shield heat against the outside.

Here, the beams 200 and the floor beams 300 are installed to provide structural stability to the slab module 100 in accordance with the present embodiment, and each of the beams 200 and the floor beams 300 is spaced apart from one another in an installation space.

A construction method is described in short below. First, after the beams 200 and the floor beams 300 are installed in accordance with installation regulations, the remaining elements, such as the glass wool heat shield material 400, the frame board 500, and the heat shield material 600, are installed at their positions.

Next, the slab module 100 in accordance with the present embodiment is disposed over the beams 200 and the floor beams 300. More particularly, first, the deck plate 110 having the pipe installation groove 111 already formed in its top surface is formed over the beams 200 and the floor beams 300. Here, a plurality of the deck plates 110 is installed in a construction site, and the pipe installation grooves 111 installed in the respective deck plates 110 may be identical with each other or may be partially different. In other words, the pipe installation groove 111 having a shape suitable for a corresponding position is formed in each of the deck plates 110 installed in a construction site by taking the straight-line coupling and bending coupling of the ondol pipe 120 into consideration.

Next, the ondol pipe 120 is bent or cut so that it corresponds to the shape of the pipe installation groove 111, and the ondol pipe 120 is placed in the pipe installation groove 111. Next, the finishing plate 130 is installed over the deck plate 110, thereby completing final construction.

As shown in FIG. 3, the floor system in accordance with the second embodiment includes a plurality of pillars 700 spaced apart from one another, a plurality of beams 200 configured to couple the pillars 700, and the slab module 100 configured to couple the beams 200.

While the invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A floor system integrated with an ondol pipe (120), comprising:
a plurality of beams (200) spaced apart from one another;
floor beams (300) each disposed between the beams;
a slab module (100) integrated with an ondol pipe (120) disposed over the beams (200) and the floor beams (300);
a glass wool heat shield materials (400) disposed between the floor beams (300);
a frame board (500) disposed to come in contact with the bottoms of the floor beams (300);and
a heat shield material (600) disposed under the beams and the floor beams;
wherein the slab module integrated with an ondol pipe comprises
a deck plate (110) configured to have a pipe installation groove (111) already formed therein and have iron reinforcing rods(112) installed therein;
an ondol pipe placed in the pipe installation groove; and
a finishing plate(130) which is made of cement mortar or yellow soil mortar disposed over the deck plate.

## Patentansprüche

1. Fußbodensystem mit einem integrierten Ondolrohr (120), umfassend:
eine Vielzahl von Trägern (200), die voneinander beabstandet sind;
Fußbodenträgern (300), die jeweils zwischen den Trägern angeordnet sind;
ein Plattenmodul (100), das mit einem Ondolrohr (120) integriert ist, angeordnet über den Trägern (200) und den FußbodenTrägern (300);
ein Glaswollewärmeabschirmmaterial (400), das zwischen den FußbodenTrägern (300) angeordnet ist;
ein Rahmenbrett (500), das angeordnet ist, um in Kontakt mit den Böden der FußbodenTrägern (300) zu kommen;
ein Wärmeabschirmmaterial (600), das unter den Trägern und den FußbodenTrägern angeordnet ist;
wobei das Plattenmodul, das mit einem Ondolrohr integriert ist, eine Deckplatte (110) umfasst, die konfiguriert ist, um eine Rohrinstallationsrille (111), bereits darin gebildet, und Eisenverstärkungsstangen (112), die darin installiert sind, aufzuweisen;
wobei ein Ondolrohr in der Rohrinstallationsrille angeordnet ist; und
eine Endfertigungsplatte (130), die hergestellt ist aus Zementmörtel oder Gelberdenmörtel, angeordnet über der Deckplatte.

## Revendications

1. Système de plancher intégré avec un tuyau d'ondol (120), comprenant :
une pluralité de poutres (200) espacées l'une de l'autre ;
des poutres de plancher (300), chacune étant disposée entre les poutres ;
un module de dalle (100) incorporant un tuyau d'ondol (120) disposé sur les poutres (200) et les poutres de plancher (300) ;
un matériau d'écran thermique en laine de verre (400) disposé entre les poutres de plancher (300) ;
un plateau cadre (500) disposé de façon à entrer en contact avec les parties inférieures des poutres de plancher (300) ; et
un matériau d'écran thermique (600) disposé sous les poutres et les poutres de plancher ;
le module de dalle intégré avec un tuyau d'ondol comprenant
une plaque de plancher (110) configurée avec une cannelure d'installation du tuyau (111) déjà formée dans celle-ci et pour permettre l'installation dans celle-ci de tiges d'armature en fer (112) ;
un tuyau d'ondol placé dans la cannelure d'installation du tuyau ; et
une plaque de finition (130), fabriquée en mortier de ciment ou en mortier de terre jaune, étant disposée au-dessus de la plaque de plancher.
